# Europäisches Patentamt

## European Patent Office

## Office européen des brevets

(11) Veröffentlichungsnummer: **0 039 530**
**B1**

(12) # EUROPÄISCHE PATENTSCHRIFT

(45) Veröffentlichungstag der Patentschrift:
15.10.86

(51) Int. Cl.⁴: **B 65 G 17/06**

(21) Anmeldenummer: 81200459.6

(22) Anmeldetag: 27.04.81

(54) **Plattenbandförderer.**

(30) Priorität: **06.05.80 DE 3017263**

(43) Veröffentlichungstag der Anmeldung:
**11.11.81 Patentblatt 81/45**

(45) Bekanntmachung des Hinweises auf die Patenterteilung:
**15.10.86 Patentblatt 86/42**

(84) Benannte Vertragsstaaten:
**AT BE DE FR GB**

(56) Entgegenhaltungen:
**DE-A-2 040 477
DE-C-351 279
GB-A-881 518**

(73) Patentinhaber: **TKV Transportanlagen-
Konstruktions- und Vertriebs- Gesellschaft mbH,
Heinrich von Kleist- Strasse 2, D-6380 Bad
Homburg (DE)**

(72) Erfinder: **Möller, Klaus, Dr. Dr.- Ing., Am
Rehlingsbach 35, D-6382 Friedrichsdorf (DE)**
Erfinder: **Michel, Dierk, Ing. grad., Wingertstrasse
34, D-6361 Niddatal 1 (DE)**
Erfinder: **Schweitzer, Harald, Taunusstrasse 21 c,
D-6370 Oberursel 6 (DE)**
Erfinder: **Scheu, Ernst, Am Eisernen Schlag 31,
D-6000 Frankfurt am Main (DE)**

(74) Vertreter: **Fischer, Ernst, Dr., Reuterweg 14, D-6000
Frankfurt am Main 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft einen Plattenbandförderer mit einer endlosen Kette von hintereinander angeordneten Förderplatten, die mit Spurstangen an zwei seitlichen Laschenketten befestigt sind.

Bei Plattenbandförderern mit Spurstangen, die an zwei seitlichen Laschenketten befestigt sind, wird die gesamte Längsvorschubkraft von den gezogenen Ketten aufgenommen und die Platten müssen nur eine Tragfunktion erfüllen. Die Ketten bleiben in den Umkehrstationen geschlossen. Da jedoch Gelenkpunkte in den Laschenketten liegen, sind die Laschenketten gegen hohe Temperaturen sowie chemische und mechanische Angriffe empfindlich.

Bei Wanderrosten befindet sich im Obertrum eine Kette von einzelnen, mit den Stirnseiten aneinanderstoßenden Rostwagen. Der Vorschub erfolgt durch den jeweils ersten Rostwagen im Obertrum, der sich noch in den angetriebenen Hubrädern befindet. Der jeweils erste Rostwagen muß also die gesamte Längsvorschubkraft für alle Rostwagen im Obertrum aufnehmen. Die Kette der Rostwagen muß in den Hub- und Senkstationen getrennt werden. In der Senkradstation fallen dabei beträchtliche Materialmengen durch die bei der Trennung entstehenden Spalte zwischen benachbarten Rostwagen an.

Plattenbandförderer ermöglichen also gegenüber Wanderrosten eine beträchtlich schwächere Konstruktion der tragenden Elemente, vermeiden den Materialdurchfall in der Senkstation und ermöglichen mit Sicherheit einen geraden Lauf der Platten oder Tröge. Jedoch sind bei Plattenbandförderern die Gelenkpunkte in den Laschenketten gegen hohe Temperaturen und chemische oder mechanische Angriffe empfindlich.

Bei der Förderung von heißem Eisenschwamm, der in einem Direktreduktionsverfahren erzeugt wurde und heiß in einen Stahlherstellungsofen gefördert wird, tritt selbst bei einer Abkapselung des Plattenbandförderers eine beträchtliche Reoxidation des Eisenschwamms ein. Bei der Förderung von z.B. NE-Metallsinter oder Erzen tritt auch bei einer Abkapselung des Plattenbandförderers eine Umweltverschmutzung durch Staub oder Dämpfe ein.

Bei Sintermaschinen ist es bekannt, auf dem Obertrum die Oberkante und die Unterkante der Rostwagen mittels Dichtungen, von denen eine als berührungslose Dichtung ausgebildet sein kann, gegen die Gashauben über dem Obertrum und gegen die Windkästen unter dem Obertrum abzudichten. Zur Vermeidung des Austritts oder des Eindringens von Gasen bei Undichtigkeiten der Gleitdichtungen werden die Gleitdichtungen von einem Tunnel erfaßt, in dem durch Einleitung oder Absaugen von Gasen ein positiver oder negativer Druck gegenüber den Windkästen eingestellt wird. An der Einlauf- und Auslaufstelle der Achsen und Rollen der Rostwagen in den Tunnel sind Schleusen angeordnet (GB-PS 881 518).

Der Erfindung liegt die Aufgabe zugrunde, mit möglichst geringem Aufwand einen Plattenband förderer zu schaffen, auf dem mit Sicherheit chemische Reaktionen des Fördergutes mit den umgebenden Gasen und/oder der Austritt von Stäuben oder schädlichen Gasen oder Dämpfen in die Atmosphäre vermieden werden.

Diese Aufgabe wird erfindungsgemäß dadurch gelöst, daß Obertrum, Untertrum und Umkehrstationen in einem geschlossenen Bandkanal angeordnet sind, die Böden der Förderplatten über Distanzlagerungen mit den Spurstangen verbunden sind, die Spurstangen der Förderplatten auf jeder Seite durch einen endlosen Schlitz in der Wand des Bandkanals geführt werden der Schlitz durch an den Spurstangen befestigte berührungslose Spaltabdichtungen abgedichtet wird, der endlose Schlitz auf beiden Seiten des Bandkanals über die ganze Länge von Gaskammern gasdicht eingekleidet ist, die Laschenketten, Laufrollen und Laufschienen in den Gaskammern angeordnet sind, die Gaskammenn mit einem Überdruck gegenüber dem Bandkanal ausgestattet sind, und Eintrags- und Austragsvorrichtung für das Fördergut direkt mit dem Bandkanal verbunden sind. Der endlose Schlitz erstreckt sich über die Länge des Ober- und Untertrums und schließt die Umkehrstationen mit ein. Die Spaltabdichtungen, z. B. U-förmige Bleche, haben die Länge der Platten und laufen mit den Förderplatten um. Die Spaltabdichtungen sind nicht als Schleifdichtungen ausgebildet, d.h. sie haben ein geringes Spiel zu den feststehenden Teilen. Sie sind so ausgebildet, daß sich ihre Stirnflächen in den Umkehrstationen nicht berüren. Die Spaltdichtungen bewirken also keinen gasdichten Abschluß des Schlitzes, sondern verringern den freien Querschnitt des Schlitzes auf eine kleine Fläche.

Der endlose Schlitz auf jeder Seite des Bandkanals kann von einer kastenförmigen Gaskammer eingekleidet werden. Der endlose Schlitz kann auch von einer endlosen, kanalförmigen Gaskammer eingekleidet werden. Die Eintragsund Austragsvorrichtungen werden so ausgebildet, daß in den Bandkanal keine oder nur geringe Mengen an Außenatmosphäre eindringen können, und daß auch dem Austreten des Gases aus dem Bandkanal ein Widerstand entgegengesetzt wird. In die Gaskammern wird das gewünschte Gas an einer oder mehreren Stellen eingeleitet. Durch einen geringen Überdruck des Gases in den Gaskammern wird Gas durch den Schlitz in den Bandkanal geleitet, ein Eindringen von gasförmigen oder staubförmigen Stoffen aus dem Bandkanal in die Gaskammern verhindert, und auch ein Eindringen von Außenatmosphäre in die Gaskammern bei Undichtigkeiten verhindert. Das in den Bandkanal eingedrungene Gas kann durch die Austragsvorrichtung und eventuell durch die Eintragsvorrichtung austreten, wobei die austretende Menge durch den Widerstand dieser Vorrichtungen bestimmt wird. In den Gaskammern können Schaugläser und Wartungsöffnungen angeordnet werden.

Eine vorzugsweise Ausgestaltung be steht darin, daß der Bandkanal am Obertrum mit einer Wärmeisolierung ausgestattet ist.

Eine vorzugsweise Ausgestaltung besteht darin, daß die Kettenteilung der Laschenketten der Teilung der Förderplatten entspricht.

Eine vorzugsweise Ausgestaltung besteht darin, daß an der Oberkante der Querwände der Förderplatten Kratzleisten angeordnet sind. Dadurch ist eine einfache Reinigung des Bodens des Bandkanals von durchgefallenem Fördergut möglich. Das durchgefallene Material wird in eine Austragsvorrichtung geschoben.

Eine vorzugsweise Ausgestaltung besteht darin, daß die Eintragsvorrichtung an den Austrag für heißen Eisenschwamm einer Direktreduktionsanlage angeschlossen ist, die Austragsvorrichtung an die Beschickung eines Stahlherstellungsofens angeschlossen ist, und in die Gaskammer ein Inertgas für den Eisenschwamm eingeleitet wird. Dadurch ist es möglich, heißen Eisenschwamm ohne Abkühlung und Reoxidation in wirtschaftlicher Weise zu transportieren.

Eine vorzugsweise Ausgestaltung besteht darin, daß die Gasaustrittsöffnung des Bandkanals an eine Gasreinigung angeschlossen ist. Dadurch ist ein Transport von Fördergütern, wie z. B. Blei- oder Zinkerzen oder Sinter möglich, ohne daß schädliche Dämpfe, Gase oder Stäube in die Atmosphäre gelangen.

Die Erfindung wird an Hand der Figuren näher erläutert.

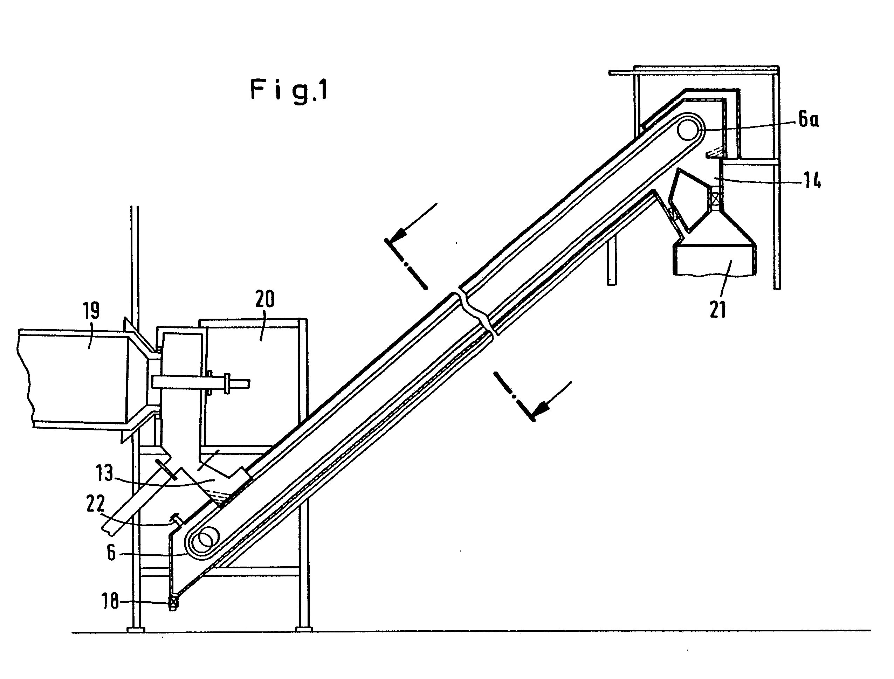

Fig. 1 ist eine Seitenansicht eines Plattenbandförderers, der heißen Eisenschwamm von einem Drehrohofen in einen Elektrolichtbogenofen transportiert, wobei der Plattenbandförderer teilweise geschnitten ist.

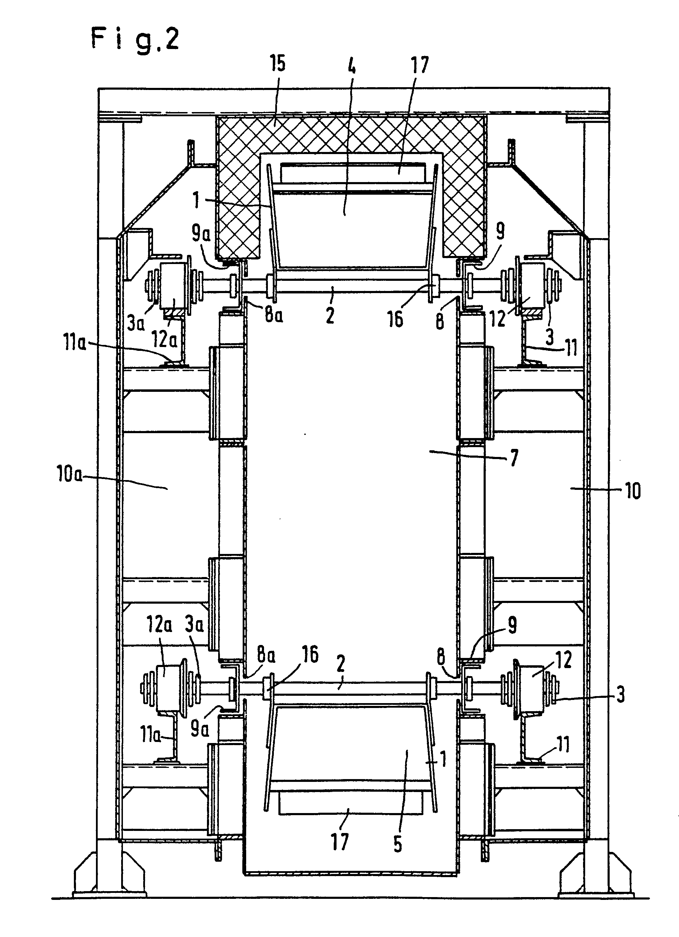

Fig. 2 ist ein Querschnitt längs A-A in Figur 1.

Der Plattenbandförderer besteht aus einer endlosen Kette von hintereinander angeordneten Förderplatten 1, die mit Spurstangen 2 an zwei seitlichen Laschenketten 3, 3a befestigt sind. Obertrum 4, Untertrum 5 sowie die Umkehrstationen 6, 6a sind in einem geschlossenen Bandkanal 7 angeordnet. In den Seitenteilen des Bandkanals 7 ist für die Durchführung der Spurstangen 2 je ein endloser Schlitz 8, 8a angeordnet. Die Schlitze 8, 8a verlaufen im Bereich des Obertrums 4 und des Untertrums 5 gerade und Parallel und in den Umkehrstationen 6, 6a kurvenförmig. An den Spurstangen 2 sind als Spaltabdichtungen 9, 9a U-förmge Bleche befestigt, die mit den Förderplatten 1 umlaufen und keine Berührung mit den feststehenden Teilen haben. Die Spaltabdichtungen 9, 9a verkleinern den freien Querschnitt der Schlitze 8, 8a. Die Schlitze 8, 8a werden über ihre ganze Länge von Gaskammern 10, 10a gasdicht eingekleidet. Die Gaskammern 10, 10a sind kastenförmig ausgebildet. In den Gaskammern 10, 10a sind Laufschienen 11, 11a angeordnet, auf denen die Spurstangen 2 mittels Laufrollen 12, 12a abgestützt werden. Die Eintragsvorrichtung 13 und die Austragsvorrichtung 14 sind direkt mit dem Bandkanal 7 verbunden. Am Obertrum 4 ist der Bandkanal 7 mit einer Wärmeisolierung 15 versehen. Die Böden der Förderplatten 1 sind über Distanzlagerungen 16 mit den Spurstangen 2 verbunden. An den Oberkanten der Querwände der Förderplatten 1 sind Kratzleisten 17 angebracht, die auf den Boden des Bandkanals 7 gefallenes Fördergut zu einer Basdichten Austragsvorrichtung 18 fördern. Die Eintragsvorrichtung 13 ist unter dem Austragsende eines Drehrohofens 19 in einem Austragskopf 20 angeordnet und wird durch das in ihr befindliche, Schwammeisen enthaltende Material weitgehend abgedichtet. Die Austragsvorrichtung 14 chargiert das Material in einen Lichtbogenofen 21. Sie ist teilweise abdichtend ausgebildet. Durch den Einlaß 22 wird Stickstoff in die Gaskammern 10, 10a in einer solchen Menge eineleitet, daß in den Gaskammern 10, 10a ein etwas höherer Druck vorliegt als in dem Bandkanal 7. Der Stickstoff strömt durch die Schlitze 8, 8a in den Bodenkanal 7 und von dort entsprechend dem Widerstand der Austragsvorrichtung 14 in den Lichtbogenofen 21.

Die Vorteile der Erfindung bestehen darin, daß heißes mit der Atmosphäre reagierendes Fördergut, wie Schwammeisen einer Direktreduktionsanlage, unter Schutzgas sicher und in einfacher Weise transportiert werden kann, und daß ebenfalls Fördergut, das schädliche Gase, Lämpfe oder Stäube beim Transport entwickelt, ohne Umweltverschmutzung transportiert werden kann. Durch den Abstandzwischen den Böden der Förderplatten und den Spurstangen wird die Wärmeübertragung vom Förgergut auf die Spurstangen verringert. Außerdem ist eine Auswechslung einzelner Förderplatten ohne Lösung der Kettenstränge möglich.

**Patentansprüche**

1. Plattenbandförderer mit einer endlosen Kette von hintereinander angeordneten Förderplatten (1), die mit Spurstangen (2) an zwei seitlichen Laschenketten (3, 3a) befestigt sind, dadurch gekennzeichnet, daß Obertrum (4), Untertrum (5) und Umkehrstationen (6, 6a) in einem geschlossenen Badkanal (7) angeordnet sind, die Böden der Förderplatten (1) über Distanzlagerungen (16) mit den Spurstangen (2) verbunden sind, die Spurstangen (2) der Förderplatten (1) auf jeder Seite durch einen endlosen Schlitz (8, 8a) in der Wand des Bandkanals (7) geführt werden, der Schlitz (8, 8a) durch an den Spurstangen (2) befestigte berürungslose Spaltabdichtungen (9, 9a) abgedichtet wird der endlose Schlitz (8, 8a) auf beiden Seiten des Bandkanals (7) über die ganze Länge von Gaskammern (10, 10a) gasdicht eingekleidet ist, die Laschenketten (3, 3a), Laufrollen (12, 12a) und Laufschienen (11, 11 a) in den Gaskammern (10, 10a) angeordnet sind, die Gaskammern (10, 10a) mit einem Überdruck gegenüber dem Bandkanal (7) ausgestattet sind, und Eintrags- (13) und Austragsvorrichtung (14) für das Fördergut direkt mit dem Bandkanal (7) verbunden sind.

2. Plattenbandförderer nach Anspruch 1, <u>dadurch gekennzeichnet</u>, daß der Bandkanal (7) am Obertrum (4) mit einer Wärmeisolierung (15) ausgestattet ist.

3. Plattenbandförderer nach Anspruch 1 oder 2, <u>dadurch gekennzeichnet</u>, daß die Kettenteilung der Laschenketten (3, 3a) der Teilung der Förderplatten (1) entspricht.

4. Plattenbandförderer nach einem der Ansprüche 1 bis 3, <u>dadurch gekennzeichnet</u>, daß an der Oberkante der Querwände der Förderplatten (1) Kratzleisten (17) angeordnet sind.

5. Plattenbandförderer nach einem der Ansprüche 1 bis 4, <u>dadurch gekennzeichnet</u>, daß die Eintragsvorrichtung (13) an den Austrag für heißen Eisenschwamm einer Direktreduktionsanlage (19) angeschlossen ist, die Austragsvorrichtung (14) an die Beschickung eines Stahlerstellungsofens (21) angeschlossen ist, und in die Gaskammer (10, 10a) ein Inertgas für den Eisenschwamm eingeleitet wird.

6. Plattenbandförderer nach einem der Ansprüche 1 bis 4, <u>dadurch gekenneichnet</u>, daß die Gasaustrittsöffnung des Bandkanals (7) an eine Gasreinigung angeschlossen ist.

**Claims**

1. A steel plate conveyor comprising an endless strand of consecutive troughs (1) provided with cross rods (2), which are fastened to two flat link chains (3, 3a) located at each side, characterized in that the upper strand (4), the lower strand (5) and the reversing stations (6, 6a) are disposed in a closed conveyor duct (7), the bottoms of the troughs (1) are connected by spacer fixings (16) to the cross rods (2), the cross rods (2) of the troughs (1) extend on each side through an endless slot (8, 8a) within the sidewall of the conveyor duct (7), the slot (8, 8a) is sealed by nontouching gap seals (9, 9a) which are located on the cross rods (2), the endless slot (8, 8a) is covered gastight throughout its length by gas chambers (10, 10a) on both sides of the conveyor duct (7), the flat link chains (3, 3a), idlers (12, 12a) and rails (11, 11a) are accommodated in the gas chambers (10, 10a), the pressure in the gas chambers (10, 10a) is higher than the pressure in the conveyor duct (7), and a feeding device (13) and a discharge device (14) for the bulk to be handled communicate directly with the conveyor duct (7).

2. A steel plate conveyor according to claim 1, characterized in that the conveyor duct (7) is provided with heat-insulating means (15) in the upper strand (4).

3. A steel plate conveyor according to claim 1 or 2, characterized in that the pitch of the flat link chains (3, 3a) equals the pitch of the troughs (1).

4. A steel plate conveyor according to any of claims 1 to 4, characterized in that scraper bars (17) are provided at the top edge of the cross walls of the troughs (1).

5. A steel plate conveyor according to any of claims 1 to 4, characterizéd in that the feeding device (13) is connected to means for discharging hot sponge iron from a direct reduction plant (19), the discharge device (14) is connected to a feeder for a steelmaking furnace (21), and a gas which is nonreactive with the sponge iron is supplied into the gas chamber (10, 10a).

6. A steel plate conveyor according to any of claims 1 to 4, characterized in that the gas outlet opening of the conveyor duct (7) is connected to gas-cleaning means.

**Revendications**

1. Transporteur à palettes comportant une chaîne sans fin de palettes de transport (1) disposées les unes derrière les autres et qui sont fixées par des barres d'accouplement (2) à deux chaînes latérales à articulations (3, 3a), caractérisé par le fait que le brin supérieur (4), le brin inférieur (5) et les postes de renvoi (6, 6a) sont disposés dans un conduit fermé (16) de circulation du transporteur, que les fonds des palettes de transport (1) sont reliés par l'intermédiaire de supports-entretoises (16) aux barres d'accouplenent (2), que les barres d'accouplement (2) des palettes de transport (1) sont guidées, de chaque côté, par une fente sans fin (8, 8a) ménagée dans la paroi du conduit (7) de circulation de la bande, que la fente (8, 8a) est fermée de façon étanche par des garnitures d'étanchéité (9, 9a) sans contact, fixées sur les barres d'accouplement (2), que la fente sans fin (8,8a) est bordée de façon étanche au gaz, des deux côtés du conduit (7) de circulation du transporteur et sur toute la longueur de ce dernier, par des chambres à gaz (10, 10a) que les chaînes à articulations (3, 3a), les galets de roulement (12, 12a) et les rails de roulement (11, 11a) sont disposés dans les chanbres (10, 10a) servant à loger le gaz, que ces chambres (10, 10a) sont placées en surpression par rapport au conduit (7) de circulation du transporteur, et qu'un dispositif d'entrée (13) et un dispositif de sortie (14) pour le produit à transporter sont reliés directement au conduit (7) de circulation du transporteur.

2. Convoyeur à palettes suivant la revendication 1, caractérisé par le fait que le conduit (7) de circulation de la bande comporte, au niveau du brin supérieur (4), un dispositif calorifuge (15).

3. Convoyeur à palettes suivant la revendication 1 ou 2, caractérisé par le fait que le pas des chaînes à articulations (3, 3a) correspond au pas des palettes de transport (1).

4. Transporteur à palettes suivant l'une des revendications 1 à 3, caractérisé par le fait que des raclettes (17) sont montées sur le bord supérieur des parois transversales des palettes de transport (1).

5. Convoyeur à palettes suivant l'une des revendications 1 à 4, caractérisé par le fait que le dispositif d'entrée (13) est raccordé à la sortie d'extraction d'une éponge de fer chaude d'une installation de réduction directe (19), que le dispositif de sortie (14) est raccordé au dispositif de chargement d'un four (21) de fabrication d'acier et qu'un gaz inerte pour l'éponge de fer est introduit dans la chambre (10, 10a) servant à loger le gaz.

6. Convoyeur à palettes suivant l'une des revendications 1 à 4, caractérisé par le fait que l'ouverture de sortie des gaz du conduit (7) de circulation de la bande est raccordé à un dispositif d'épuration des gaz.

# Fig.1

6a

14

21

19

20

13

22

6

18

0 039 530

Fig.2